Europäisches Patentamt

European Patent Office

Office européen des brevets

(19)

(11) Veröffentlichungsnummer: **0 093 351**

**A1**

(12) **EUROPÄISCHE PATENTANMELDUNG**

(21) Anmeldenummer: 83103972.2

(51) Int. Cl.³: **B 60 B 1/04**

(22) Anmeldetag: 22.04.83

(30) Priorität: 03.05.82 DE 3216396

(43) Veröffentlichungstag der Anmeldung:
09.11.83 Patentblatt 83/45

(84) Benannte Vertragsstaaten:
AT BE CH FR GB IT LI LU NL SE

(71) Anmelder: von der Osten-Sacken, Ernst, Dr.-Ing., Prof.
Grünepleistrasse 37
D-5106 Roetgen(DE)

(72) Erfinder: von der Osten-Sacken, Ernst, Dr.-Ing., Prof.
Grünepleistrasse 37
D-5106 Roetgen(DE)

(74) Vertreter: Geitz, Heinrich, Dr.-Ing.
Postfach 2708 Kaiserstrasse 156
D-7500 Karlsruhe 1(DE)

(54) Nabenseitige Verankerung der Drahtspeichen bei Drahtspeichenrädern.

(57) Bei der Verankerung werden die mit Köpfen versehenen Speichenenden in Halterungen der Speichenflanschen aufgenommen, die je aus einer Einführöffnung für die Speichenköpfe und einem sich von dieser Einführöffnung nach außen forterstreckenden Aufnahmeschlitz für die sich an die Speichenköpfe anschließenden Speichenenden bestehen, und dadurch in ihren Montagelagen formschlüssig gehalten, daß die Speichenköpfe die Ränder der Aufnahmeschlitze hintergreifen.

FIG.6

DR. ING. HEINRICH GEITZ PATENTANWALT 7500 KARLSRUHE 1, POSTFACH 2708

832060

Anmelder: von der Osten-Sacken, Ernst

Prof.-Dr.-Ing.

Grünepleistraße 37

5106 Roetgen
Bundesrepublik Deutschland

Nabenseitige Verankerung der Drahtspeichen bei Drahtspeichenrädern

================================================================

Die Erfindung bezieht sich auf die nabenseitige Verankerung der Drahtspeichen an den Speichenflanschen
der Radnaben bei Drahtspeichenrädern, bei der die mit
Köpfen versehenen Speichenenden in Halterungen der
Speichenflanschen aufgenommen und formschlüssig gehalten sind. Insbesondere betrifft die Erfindung die
nabenseitige Verankerung der Drahtspeichen an den
Speichenflanschen der Radnaben bei Speichenrädern für
Zweiradfahrzeuge, wie Fahrräder.

Bei bekannten Drahtspeichenrädern sind die gegenüber den Speichenlängsachsen abgebogenen und mit angestauchten Köpfen versehenen Enden der Drahtspeichen nabenseitig in Lochungen der Speichenflanschen aufgenommen und vermittels der angestauchten Köpfe formschlüssig in ihren Montagelagen gehalten. Diese Ausbildung der Verankerung der Drahtspeichen an den Speichenflanschen von Radnaben erfordert eine Montage in der Weise, daß zunächst die Speichen mit ihren von den angestauchten Köpfen entfernten Enden in die Aufnahmelöcher der Speichenflanschen eingefädelt und dann durchgesteckt werden müssen.

Während die so vormontierten sogenannten "Igel" in Verbindung mit üblichen Radfelgen mit Hilfe einer Nippelaufdrehmaschine zu kompletten Drahtspeichenrädern weiterverarbeitet werden können, gelingt das Einfädeln der Drahtspeichen in die Löcher der Speichenflanschen nur von Hand, so daß sich die Montage von Drahtspeichenrädern als recht kostenaufwendig erweist. Ausgehend von der Erkenntnis, daß diese Montagekosten nur durch Automatisierung der Speichenmontage wesentlich gesenkt werden können, besteht die der Erfindung zugrunde liegende Aufgabe darin, die nabenseitige Verankerung

- 3 -

der Drahtspeichen im Hinblick auf die Möglichkeit einer automatischen Speichenmontage zu verbessern.

Diese Aufgabe ist erfindungsgemäß dadurch gelöst, daß bei einer nabenseitigen Speichenverankerung der eingangs angegebenen Art· die Halterungen in den Speichenflanschen je aus einer Einführöffnung für die Speichenköpfe und einem sich von dieser Einführöffnung nach außen forterstreckenden Aufnahmeschlitz für die sich an die Speichenköpfe anschließenden Speichenenden bestehen und daß in der Montagelage der Speichen die Speichenköpfe die Ränder der Aufnahmeschlitze formschlüssig hintergreifen.

Eine derartige Ausbildung der Halterungen ermöglicht es, die Speichen vor der Montage entsprechend ihren bestimmungsgemäßen Lagen im fertigen Rad auszurichten und an die Speichenflanschen heranzubringen, die angestauchten Köpfe in die Einführöffnungen der Halterungen einzuführen und dann die Speichen in Richtung ihrer Längsachsen nach außen zu bewegen, wobei die den Speichenköpfen benachbarten Speichenenden in die sich an die Einführöffnungen anschließenden Aufnahmeschlitze eingreifen. Damit ist die nabenseitige Ver-

- 4 -

ankerung vollendet und die Speichenenden sind dadurch in ihren Montagelagen formschlüssig so gehalten, daß die angestauchten Speichenköpfe die Ränder der Aufnahmeschlitze hintergreifen.

Zweckmäßige Ausgestaltungen der erfindungsgemäßen Verankerung sind in den Unteransprüchen angegeben.

Bei der Ausgestaltung nach Patentanspruch 2 sind die Einführöffnungen für die Speichenköpfe in vorbestimmten Abständen voneinander auf einem Teilkreis angeordnete Ausnehmungen in den Speichenflanschen und die Aufnahmeschlitze für die Speichenenden erstrecken sich in der Art von Langlöchern von diesen Ausnehmungen nach außen fort. Bei der Montage üblicher Drahtspeichen, bei denen die Speichenköpfe an gegenüber der Speichenlängserstreckung rechtwinklig abgebogenen Endabschnitten angeordnet sind, müssen beim Heranbringen der Drahtspeichen an die Speichenflanschen die angestauchten Köpfe in Richtung der genannten Ausnehmungen weisen, so daß die Köpfe durch die Ausnehmungen hindurchgeführt und dann die Speichen in Richtung ihrer Längsachsen nach außen bewegt werden können. Das Ausrichten, Heranbringen und Nachaußenbewegen der Speichen in Richtung ihrer Längsache, nachdem

-5-

die Speichenköpfe durch die die Einführöffnungen in den Speichenflanschen bildenden Ausnehmungen hindurchgesteckt sind, ist unproblematisch automatisierbar.

Bei einer anderen zweckmäßigen Ausgestaltung der Erfindung sind die Halterungen zumindest teilweise aus der Ebene des jeweiligen Speichenflanschs seitlich herausgeformte Auflager mit je einer zur Radnabe hin offenen Einführöffnung für die Speichenköpfe und einem sich von der Einführöffnung nach außen erstreckenden, in der Montagelage der Speichen jeweils das sich an den Speichenkopf anschließende Speichenende aufnehmenden Schlitz. Auch bei dieser Ausgestaltung gelingt die Speichenmontage unproblematsich in der Weise, daß die Speichen so lagerichtig von der Seite her an den jeweiligen Speichenflansch herangeführt werden, daß die sich an die Speichenköpfe anschließenden Speichenenden in die Aufnahmeschlitze eingreifen und die Speichenköpfe nabenseitig von den Einführöffnungen stehen, so daß die Verankerung der Speichen an den Speichenflanschen durch eine Bewegung der Speichen nach außen in Richtung ihrer Längsachsen gelingt.

832060

0093351

- 6 -

Bei der zuletzt genannten Ausgestaltung hat es sich als zweckmäßig erwiesen, die in Umfangsrichtung jeweils benachbarten Halterungen eines Speichenflanschs in einer Richtung senkrecht zur Flanschebene um ein Maß wenigstens gleich dem Speichendurchmesser versetzt anzuordnen, so daß zwei nebeneinanderliegende Speichen einander ohne Verbiegungen kreuzen. Dabei ist es von Vorteil, wenn wenigstens bei jeder zweiten in Umfangsrichtung aufeinanderfolgenden Halterung eines Speichenflanschs ein im wesentlichen mit dem Aufnahmeschlitz für das Speichenende der mit ihrem Kopf in dieser Halterung aufgenommenen Drahtspeiche fluchtender U-förmiger Kanal sich nach außen forterstreckt und das Speichenende aufnimmt, das sich von dem Aufnahmeschlitz nach außen erstreckt.

Eine andere vorteilhafte Weiterbildung der zweiten Ausgestaltung der Erfindung besteht darin, daß bei Doppelflansch-Radnaben die Halterungen der beiden Speichenflanschen auf voneinander entfernten Flanschseiten angeordnet sind, so daß grundsätzlich die Drahtspeichen bei der Montage von außen an die Speichenflanschen heranzubringen sind.

-7-

Obgleich bei der ersten Ausgestaltung der Erfindung herkömmliche Drahtspeichen mit an abgebogenen Endabschnitten angestauchten Speichenköpfen Verwendung finden können und für die zweite Ausgestaltung der Erfindung vielfältige Möglichkeiten der Speichenausbildung vorstellbar sind, besteht für diese zweite Ausgestaltung ein wichtiges weiterbildendes Erfindungsmerkmal darin, daß die Drahtspeichen mit den an ihren einen Enden angeformten Speichenköpfen zu ihrer Längsachse drehsymmetrisch ausgebildet sind, so daß es beim Heranbringen der Speichen an die Speicheflanschen in bezug auf die Lage des Speichenkopfs keines Ausrichtens bedarf. Darüber hinaus haben Dauerfestigkeitsuntersuchungen gezeigt, daß gerade Speichen etwa doppelt so hohe Dauerfestigkeit aufweisen, wie aus dem gleichen Material hergestellte Speichen mit an umgebogenen Endabschnitten angeformten Speichenköpfen.

Insbesondere das ausgestaltende Erfindungsmerkmal der drehsymmetrischen Speichenausbildung ist für die Automatisierung des Montagevorganges besonders geeignet, weil gerade Speichen besonders gut hantierbar sind und dadurch eine automatengerechte Verbindung der Speichen mit einer Nabe ohne komplizierte Schwenkbewegungen der Speichen gelingt.

832060

- 8 -

Anhand der beigefügten Zeichnung sollen nachstehend verschiedene Ausführungsmöglichkeiten der Erfindung erläutert werden. In schematischen Ansichten zeigen:

Fig. 1 eine Radnabe mit zwei im Abstand voneinander angeordneten Speichenflanschen für sich allein,

Fig. 2 in einer Ansicht gemäß Pfeil II in Fig. 1 einen Ausschnitt aus einem Speichenflansch mit einer nabenseitigen Verankerung eines Speichenendes,

Fig. 3 die Verankerung in einer Schnittansicht gemäß Schnittlinie III-III in Fig. 2,

Fig. 4 in einer Ansicht wie in Fig. 2 eine alternative Ausführungsform mit zu ihren Längsachsen drehsymmetrischen Drahtspeichen,

Fig. 5 eine Ansicht der Verankerung gemäß Pfeil V in Fig. 4,

Fig. 6 in einer Ansicht wie in Fig. 3 einen Schnitt gemäß der Schnittlinie VI-VI in Fig. 4 durch die alternative Ausführungsform,

Fig. 7 eine Draufsicht auf die zweite Ausführungsform der Verankerung mit Blickrichtung gemäß Pfeil VII in Fig. 6 und

Fig. 8 den axialen Versatz benachbarter Speichenverankerungen miteinander kreuzenden Speichen.

- 9 -

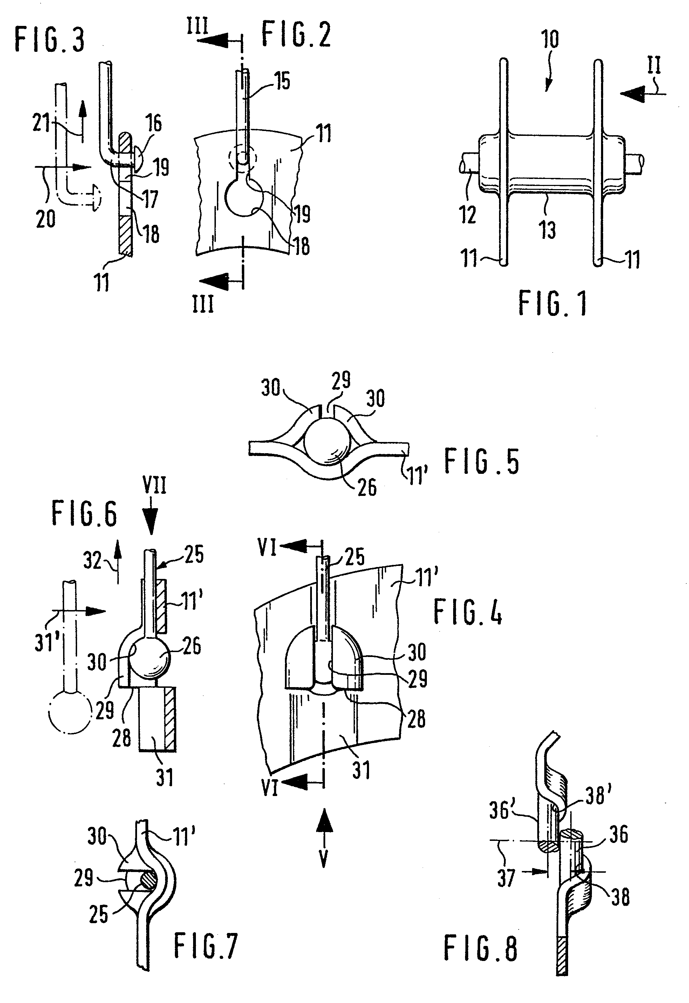

Die in Fig. 1 gezeigte Radnabe 10 ist eine typische Fahrradnabe mit zwei in axialem Abstand voneinander angeordneten Speichenflanschen 11, die sich von dem mittels einer Achse 12 in hier nicht weiter interessierender Weise drehbar gelagerten Nabenkörper 13 radial forterstreckenden und an denen die nabenseitigen Enden der Drahtspeichen verankert sind.

Bei der Ausführungsform nach den Fig. 2 und 3 handelt es sich um die automationsgerechte Verankerung des nabenseitigen Endes herkömmlicher Drahtspeichen 15, bei denen der angestauchte Speichenkopf 16 sich an einem gegenüber der Speichenlängsachse abgebogenen Endabschnitt 17 befindet. Lie das Speichenende aufnehmenden Halterungen im Speichenflansch 11 bestehen aus sich quer durch den Speichenflansch hindurcherstreckenden, auf einem Teilkreis in vorbestimmten Abständen voneinander über den Umfang verteilt angeordneten Ausnehmungen 18, welche als Einführöffnungen für die Speichenköpfe 16 ausgebildet sind, und je einem sich von diesen Ausnehmungen nach außen forterstreckenden Aufnahmeschlitz 19 für die abgebogenen Speichenenden 17.

In Fig. 3 ist in strichpunktierten Linien eine Drahtspeiche in seitlichem Abstand von dem Speichenflansch 11

geæigt, deren abgebogenes Ende mit dem angestauchten Speichenkopf in Richtung der die Einführöffnung bildenden Ausnehmung 18 im Speichenflansch weist und bei der Montage von der Seite her in der Weise an den Speichenflansch herangeführt wird, daß der gegenüber der Speichenlängsachse abgebogene Endabschnitt mit dem angestauchten Speichekopf durch die Einführöffnung hindurchgeführt wird, bis sich der Speichenkopf auf der von der Einführseite entfernten Seite des Speichenflanschs befindet. Dies deutet der Pfeil 20 an. Zur Verankerung der Speiche 15 bedarf es dann lediglich einer nach außen gerichteten Bewegung der Drahtspeiche in Richtung der Speichenlängsachse, wie der Pfeil 21 anzeigt, wobei der abgebogene Endabschnitt 17 in den sich von der Einführöffnung nach außen forterstreckenden, langlochartigen Aufnahmeschlitz 19 der Halterung gelangt und der angestauchte Speichenkopf die Ränder dieses Aufnahmeschlitzes auf der von der Speiche entfernten Seite des Speichenflanschs hintergreift.

Die Ausführungsform nach den Fig. 4 bis 7 unterscheidet sich von der vorstehend erläuterten Ausführungsform einerseits durch den Einsatz drehsymmetrischer Speichen 25 mit ballig angestauchten Speichenköpfen 26 und andererseits durch zumindest teilweise aus der Ebene der Speichenflanschen 11' herausgeformte Halterungen, die zur
Drehachse der Radnabe hin offene Einführöffnungen 28
für die Speichenköpfe und ebenfalls sich von diesen
Einführöffnungen nach außen erstreckenden Aufnahmeschlitze 29 für die den Speichenköpfen benachbarten
Speichenenden aufweisen und im übrigen der Form der
Speichenköpfe entsprechend gestaltete Auflager 30
bilden. Diese Auflager sind durch Stanzen und Kaltpressen auf der einen Seite aus den Speichenflanschen
herausgeformt,während sich nabenseitig an die
Einführöffnungen 28 nach der jeweils anderen Flanschseite verformte Einführabschnitte 31 anschließen.

Die sich von den Einführöffnungen aus nach außen forterstreckenden Aufnahmeschlitze 29 für die Speichenenden verlaufen in den seitlich aus den Speichenflanschen
herausgeformten Auflagern 30, so daß auch bei dieser
Ausführungsform die Montage der Speichen in der Weise
gelingt, daß diese lagerichtig von der Seite her an
die Speichenflanschen herangeführt werden, wobei die
Speichenköpfe nabenseitig von den jeweils zur Nabe
hin offenen Einführöffnungen 28 stehen müssen. Bei
diesem Heranbringen der Speichen greifen die den Speichenköpfen benachbarten Speichenenden in die sich
in den Auflagern 30 von deren Einführöffnungen 28 nach
außen forterstreckenden Aufnahmeschlitze 29 ein und für
die Verankerung der so an die Speichenflanschen herangebrachten Speichen bedarf es dann lediglich noch einer
Speichenbewegung in Richtung der Speichenlängsachsen
nach außen, wodurch die Speichenköpfe in die zumindest
teilweise aus der Ebene der Speichenflanschen herausgeformten Auflager 30 hineingleiten und formschlüssig
in ihren Lagen gehalten sind, wobei die Speichenköpfe
die Ränder der Aufnahmeschlitze 29 auf der zur Nabe
hinweisenden Seite formschlüssig hintergreifen. In
Fig. 6 ist in strichpunktierten Linien eine derartige
Drahtspeiche vor dem Zuführen zum Speichenflansch gezeigt. Der Pfeil 31 deutet das Heranbringen der
Drahtspeiche an den Speichenflansch an, wobei das
sich an den angestauchten Speichenkopf anschließende
Speichenende in den sich von der Einführöffnung 28
nach außen forterstreckenden Aufnahmeschlitz des
Auflagers eingreift, während der nach außen gerichtete
Pfeil 32 die den Eingriff des Speichenkopfs in das
Auflager vermittelnde Auswärtsbewegung der Speiche
andeutet.

Bei einer Doppelflanschnabe der in Fig. 1 dargestellten
Art ist es im Interesse einer einfachen Speichenmontage geboten, die Halterungen für die Speichenenden mit der zur Nabe hin offenen Einführöffnung 28 jeweils nach der vom anderen Speichenflansch entfernten Seite aus den Speichenflanschen herauszuformen. Dadurch gelingt es, die Speichen an beiden Speichenflanschen jeweils von der vom anderen Flansch entfernten Seite zuzuführen.

Bei der in Fig. 8 veranschaulichten Ausführungsform sind aufeinanderfolgende Halterungen in einem Speichenflansch axial um mindestens das Durchmessermaß 35 einer Drahtspeiche axial zueinander versetzt, so daß die mit ihren Speichenenden in diesen Halterungen verankerten Drahtspeichen 36, 36' einander ohne Verbiegungen kreuzen. An die sich von den jeweils zur Nabendrehachse 37 hin offenen Einführöffnungen forterstreckenden Aufnahmeschlitze für die Speichenenden schließen sich U-förmige Kanäle bildende Einprägungen 38, 83' in den Speichenflanschen an, in denen die aus den Aufnahmeschlitzen austretenden Abschnitte der verankerten Speichen aufgenommen sind.

DR. ING. HEINRICH GEITZ PATENTANWALT 7500 KARLSRUHE 1, POSTFACH 2708

832060

- 14 -

Anmelder:    von der Osten-Sacken, Ernst

Prof. Dr.-Ing.

Grünepleistraße 37

5106 Roetgen
Bundesrepublik Deutschland

Patentansprüche

=================

1.    Nabenseitige Verankerung der Drahtspeichen an den Speichenflanschen der Radnaben bei Drahtspeichenrädern, bei der die mit Köpfen versehenen Speichenenden in Halterungen der Speichenflanschen aufgenommen und formschlüssig gehalten sind, insbesondere bei Speichenrädern für Zweiradfahrzeuge, wie Fahrräder, dadurch gekennzeichnet,

daß die Halterungen in den Speichenflanschen (11,11') je aus einer Einführöffnung (18,28) für die Speichenköpfe (16,26) und einem sich von dieser Einführöffnung nach außen forterstreckenden Aufnahmeschlitz (19,29) für die sich an die Speichenköpfe anschließenden Speichenenden bestehen, und daß in der Montagelage der Speichen (15,25) die Speichenköpfe die Ränder der Aufnahmeschlitze formschlüssig hintergreifen.

2. Verankerung nach Anspruch 1, dadurch gekennzeichnet daß die Einführöffnungen für die Speichenköpfe (15) in vorbestimmten Abständen voneinander auf einem Teilkreis angeordnete Ausnehmungen (18) in den Speichenflanschen (11) sind und daß sich die Aufnahmeschlitze (19) für die Speichenenden in der Art von Langlöchern von diesen Ausnehmungen nach außen forterstrecken.

3. Verankerung nach Anspruch 1, dadurch gekennzeichnet, daß die Halterungen aus zumindest teilweise aus der Ebene des jeweiligen Speichenflanschs (11') seitlich herausgeformten Auflagern (30) mit jeweils einer zur Radnabe hin offenen Einführöffnung (28) für die Speichenköpfe (26) und aus einem sich von der Einführöffnung nach außen erstreckenden, in der Montagelage der Speichen (25) jeweils das sich an den Speichenkopf anschließende Speichenende aufnehmenden Schlitz (29) bestehen.

4. Verankerung nach Anspruch 3, dadurch gekennzeichnet, daß die in Umfangsrichtung jeweils benachbarten Halterungen eines Speichenflanschs (11') in einer Richtung senkrecht zur Flanschebene um ein Maß (35) wenigstens gleich dem Durchmesser der Speichen (36,36') versetzt angeordnet sind.

5.   Verankerung nach Anspruch 4, dadurch gekennzeichnet, daß wenigstens bei jeder zweiten in Umfangsrichtung aufeinanderfolgenden Halterung eines Speichenflanschs eine im wesentlichen mit dem Aufnahmeschlitz (29) für das Speichenende der mit ihrem Kopf in dieser Halterung aufgenommenen Drahtspeiche fluchtender U-förmiger Kanal (38,38') sich nach außen forterstreckt und das sich von dem Aufnahmeschlitz nach außen erstreckende Speichenende aufnimmt.

6.   Verankerung nach einem der Ansprüche 3 bis 5, dadurch gekennzeichnet, daß bei Doppelflansch-Radnaben (10) die Halterungen der beiden Speichenflanschen (11,11') auf voneinander entfernten Flanschseiten angeordnet sind.

7.   Verankerung nach einem der Ansprüche 3 bis 6, dadurch gekennzeichnet, daß die Drahtspeichen (25,36,36') mit den an ihren einen Enden angeformten Speichenköpfen (26) zu ihrer Längsachse drehsymmetrisch ausgebildet sind.

0C93351

FIG.3    III     FIG.2

FIG.1

FIG.5

FIG.6    VII

FIG.4

FIG.7    FIG.8

0093351

**Europäisches Patentamt**

## EUROPÄISCHER RECHERCHENBERICHT

Nummer der Anmeldung

EP 83 10 3972

| | EINSCHLÄGIGE DOKUMENTE | | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. 3)** |
| X | DE-C- 99 859 (HORNE) <br><br> * Insgesamt; Figuren 2,5,6 * <br><br> --- | 1,2,3, 7 | B 60 B 1/04 |
| X | FR-A-1 014 202 (RAOULT) <br> * Insgesamt; Figuren 1-4 * <br><br> --- | 1,2,6 | |
| X | FR-A- 705 342 (KOK) <br> * Insgesamt; Figuren 1-5 * <br><br> --- | 1,2,6 | |
| A | DE-A-2 703 753 (LEHANNEUR) <br> * Seite 12, Zeile 1 - Seite 14, Zeile 1; Figuren 2a-3b * <br><br> --- | 1,3 | |
| A | CH-A- 236 902 (SCINTILLA) <br> * Seite 2, Zeilen 11-44; Figuren 2-4 * <br><br> --- | 1,6 | **RECHERCHIERTE SACHGEBIETE (Int. Cl. 3)** |
| A | DE-A-2 014 403 (FICHTEL & SACHS) <br> * Seite 5, Zeilen 10-27; Figuren 1-4 * <br><br> --- | 1,2,6 | B 60 B 1 <br> B 60 N 27 |
| A | DE-C- 145 296 (SCHROEDER) <br> * Insgesamt; Figuren 6-8 * <br><br> --- | 1 | |
| A | DE-C- 49 414 (REINHOLD) <br> * Seite 1, rechte Spalte, Zeile 27 - Seite 2, linke Spalte, Zeile 13; Figuren 9-12 * <br><br> --- -/- | 1,7 | |

Der vorliegende Recherchenbericht wurde für alle Patentansprüche erstellt.

| Recherchenort <br> DEN HAAG | Abschlußdatum der Recherche <br> 02-08-1983 | Prüfer <br> AYITER I. |
|---|---|---|

Europäisches
Patentamt

# EUROPÄISCHER RECHERCHENBERICHT

Nummer der Anmeldung

EP 83 10 3972

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 269 183 (SPIESS)<br>* Insgesamt; Figuren 1,2,5,6 *<br><br>--- | 1 | |
| A | GB-A- 250 059 (BROWN)<br>* Seite 2, Zeile 115 - Seite 3, Zeile 26 *<br><br>----- | 1,5 | |

| | |
|---|---|
| | RECHERCHIERTE SACHGEBIETE (Int. Cl. ³) |

Der vorliegende Recherchenbericht wurde für alle Patentansprüche erstellt.

| Recherchenort<br>DEN HAAG | Abschlußdatum der Recherche<br>02-08-1983 | Prüfer<br>AYITER I. |
|---|---|---|